# EUROPEAN PATENT APPLICATION

(11) **EP 1 898 118 A1**
(43) Date of publication of application: **12.03.2008**
(21) Application number: 07017420.6
(22) Date of filing: 05.09.2007
(51) Int. Cl.: F16F 9/348, F16F 9/512

(54) **Valve structure**

(30) Priority: 07.09.2006 JP 2006242284; 22.03.2007 JP 2007073931
(71) Applicant: KAYABA INDUSTRY CO., LTD., Minato-ku, Tokyo 105-6190 (JP)
(72) Inventor: Chikamatsu, Satoshi c/o Kayaba Industry Co., Ltd., Tokyo 105-6190 (JP); Watanabe, Kouichi Kayaba Industry Co., Ltd., Tokyo 105-6190 (JP)
(74) Representative: Grünecker, Kinkeldey, Stockmair & Schwanhäusser Anwaltssozietät

(57) **Abstract**

A valve structure of a damper including a piston (1) defining a first chamber (41) and a second chamber (42) within the damper and having a port (2) for communicating the first chamber (41) and the second chamber (42), and a first leaf valve (10) layered to the end surface of the second chamber (42) side of the piston (1), for closing the downstream of the port (2) against the flowing direction of the working fluid when the working fluid is flowing from the first chamber (41) to the second chamber (42), wherein the valve structure further comprising a flow channel (20) for communicating the first chamber (41) and the upstream of the port (2) in the flowing direction, and a restrictor (16, 51) provided in the flow channel (20), and wherein the restrictor (16) decreases the flow channel area in the flow channel (20) when the pressure of the first chamber (41) is exceeded the downstream pressure from the restrictor (16) inside the flow channel (20) by the prescribed level.

## Description

### FIELD OF THE INVENTION

This invention relates to a valve structure of a damper.

### BACKGROUND OF THE INVENTION

Conventionally, in a valve structure of a damper, for example, those, which are used in a piston part and the like of a damper for a vehicle, and having a ring-shaped leaf valve layered to an exit end of a port provided to a piston part and opening and closing the port with this leaf valve are known.

Especially, with the valve structure of the damper which opens and closes the port with the leaf valve by fixedly supporting the inner periphery of the leaf valve and deflecting the outer periphery side, the damping force in the middle to high speed range of the piston speed becomes too large and the riding quality in the vehicle may be impaired.

To solve this, JP9-291961A discloses, as illustrated in Fig. 6, a valve structure of a damper in which the inner periphery side of the leaf valve L is not fixedly supported, but the inner periphery of the leaf valve L is slidably contacted against the piston rod R or the outer periphery of the tubular piston nut N for fixing the piston P to the piston rod R and the back side of the leaf valve L is biased by the spring S through the main valve M.

In the damper applied this valve structure, as illustrated, when the piston speed of the piston P moving upward is in the low-speed range, the outer periphery side of the relief valve L is deflected about the contacted part of the main valve M laminated on the leaf valve L as a supporting point. Thus, as illustrated in Fig. 7, the approximately same damping property as that of the valve structure in which the inner periphery is fixedly supported is exhibited, and when the piston speed is reached to the middle to high speed range, the pressure of the working fluid passing through the port Po is applied to the leaf valve L. Thereby, the leaf valve L is lifted in the axial direction from the piston P and moved backward with the main valve M against the biasing force of the spring S, and so, the flow channel area is increased compared to the valve structure of the damper in which the inner periphery is fixedly supported and the damping force is inhibited from becoming too large, therefore, it is capable of improving the riding quality in the vehicle.

### SUMMARY OF THE INVENTION

However, in the valve structure as described above, although it is the useful technique capable of improving the riding quality in the vehicle, there is a possibility of causing the following problems.

For example, when the piston speed of the piston P moving upward is reached to the high-speed range, in the conventional valve structure of the damper, the leaf valve L is only moved backward and lifted from the piston P in the axial direction according to the piston speed, and the damping coefficient is not increased.

Therefore, the damping force tends to be not enough when the piston speed is reached to the high-speed range, a vibration control is not sufficiently achieved, and thus the riding quality in the vehicle becomes impaired.

Thus, the present invention has been invented to improve the above described problems, and it is an object thereof to provide a valve structure of a damper capable of improving the riding quality in the vehicle even when the piston speed is reached to the high-speed range.

To achieve the above described object, according to the present invention, the valve structure of damper is comprised of a piston defining a first chamber and a second chamber within the damper and having a port for communicating the first chamber and the second chamber, and a first leaf valve layered to the end surface of the second chamber side of the piston for closing downstream of the port against the flowing direction of the working fluid when the working fluid is flowing from the first chamber to the second chamber, wherein a flow channel for communicating the first chamber and the upstream of the port in the flowing direction, and a restrictor provided in the flow channel are further provided, and wherein the restrictor reduces the flow channel area in the flow channel when the pressure of the first chamber is exceeded the pressure in the flow channel of the downstream of the restrictor by the prescribed level.

According to the valve structure of the damper of the present invention, when the piston speed is reached to the high-speed range, the damping force can be larger than that when the piston speed is in the middle-speed range, thus the damping force is always sufficient even when the piston speed is reached to the high-speed range, and so it is capable to sufficiently perform the vibration control to improve the riding quality in the vehicle.

Further, under such situation that the vibration amplitude is large where the damper is most extended and the piston speed is reached to the high-speed range, damping coefficient can be increased to increase the generated damping force of the damper, thereby the piston speed can be readily decreased and the shock at the time of the most extension can be softened.

### BRIEF DESCRIPTION OF THE DRAWINGS

Referring now to the attached drawings which form a part of this original disclosure.

Fig. 1 is a longitudinal sectional diagram of a piston part of a damper of the valve structure of the damper in the first embodiment.

Fig. 2 is a diagram showing a damping property in a damper of the valve structure of the damper in the first embodiment.

Fig. 3 is a diagram showing a change of damping force with time.

Fig. 4 is a longitudinal sectional diagram of a part of a piston part of a valve structure of a damper in the second embodiment.

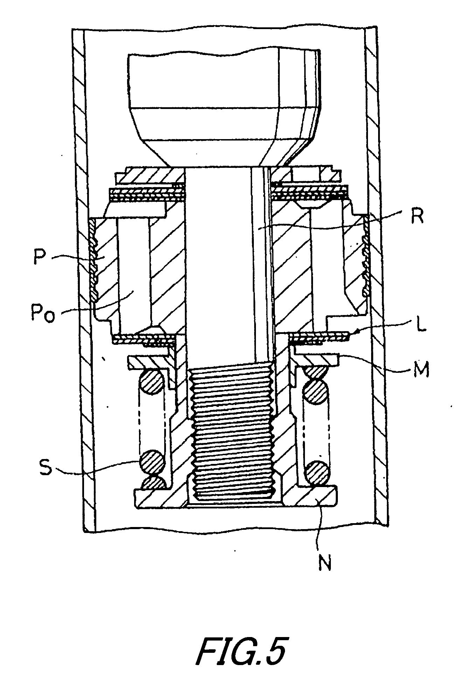

Fig. 5 is a longitudinal sectional diagram of a piston part of a damper of the conventional valve structure of the damper.

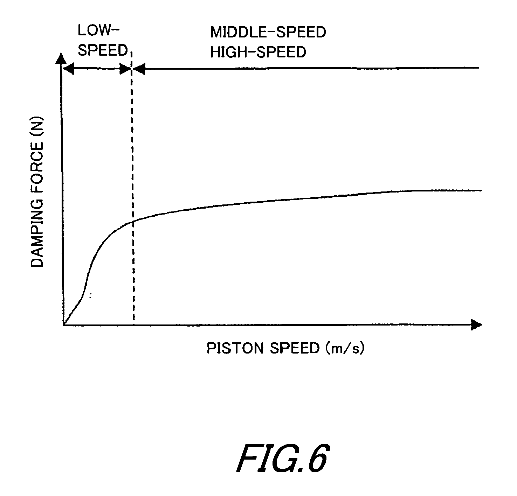

Fig. 6 is a diagram showing a damping property of a damper of the conventional valve structure of the damper.

### DETAILED DESCRIPTION OF THE PREFERRED EMBODIMENT

In the following, a description is given to the valve structure and the damper of the present invention according to the drawings.

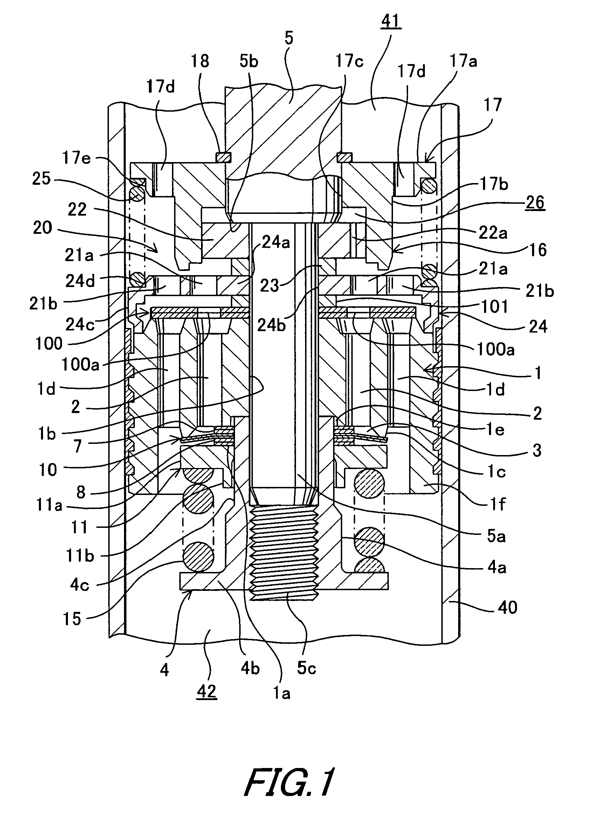

The valve structure of the damper in the first embodiment is, as illustrated in Fig. 1, used in the extending side damping valve of the piston part of the damper.

The valve structure of the damper is provided with, a piston 1 which is a valve disc linked to the tip end of the piston rod 5 for defining an upper chamber 41 which is a first chamber and a lower chamber 42 which is a second chamber within the damper and having a port 2 for communicating the upper chamber 41 and the lower chamber 42, a ring-shaped leaf valve 10 layered to the end surface of the lower chamber 42 side of the piston 1 for closing the downstream of the port 2, a ring-shaped valve suppressing member 11 layered to the leaf valve 10, a coil spring 15 which is a biasing means for biasing the leaf valve 10 through the valve suppressing member 11 to the direction closing the port 2, a flow channel 20 for communicating the upper chamber 41 and the upstream of the port 2, and a restrictor 16 provided in the flow channel 20.

The restrictor 16 is made so as to reduce the flow channel area in the flow channel 20 when the pressure of the upper chamber 41 is exceeded the pressure in the flow channel 20 at the downstream of the restrictor 16 by the prescribed level.

The damper having the valve structure is not described in detail with illustrations, as it is widely known, however, specifically, for example, a cylinder 40, a head member (not illustrated) for sealing the upper end of the cylinder 40, a piston rod 5 penetrating through the head member (not illustrated) in a freely slidable manner, the piston 1 provided to the end part of the piston rod 5, the upper chamber 41 and the lower chamber 42 which are two pressure chambers defined by the piston 1 within the cylinder 40, a sealing member (not illustrated) for sealing the lower end of the cylinder 40, and a reservoir or an air chamber (not illustrated) for compensating the volumetric change within the cylinder corresponding to the volume of the piston rod 5 projected out from the cylinder 40 are provided. Fluid, specifically working fluid is charged in the cylinder 40.

In the valve structure, when the piston 1 is moved upward in the cylinder 40 in Fig. 1, in another word, when the pressure in the upper chamber 41 is increased and the working fluid is moved from the upper chamber 41 to the lower chamber 42 through the port 2, the prescribed pressure loss is caused by creating the resistance against the movement of the working fluid by the leaf valve 10. The valve structure is functioned as a damping force generating component for generating the prescribed damping force to the damper.

In the following, a detailed description is given to this valve structure. The piston 1 which is a valve disc is formed into a cylinderical shape having a bottom. The piston 1 is provided with , a insertion hole 1b which is provided to the shaft central part of the bottom part 1a and throughwhich the piston rod 5 of the damper is inserted, the port 2, an aperture 3 communicated to the port 2, a ring-shaped valve seat 1c formed to the outer periphery side of the aperture 3 which is the exit end of the port 2 and projected from the bottom part 1a of the piston 1 to the leaf valve 10 side, and the cylinderical part 1f extendingly provided to the outer periphery side.

In addition, in the piston 1, a compressing side port 1d for allowing the flow of the working fluid from the lower chamber 42 to the upper chamber 41 during the compression of the damper is provided at the outer periphery side of the port 2 of the extending side of the bottom part 1a.

The piston rod 5 is inserted through the insertion hole 1b of the piston 1, and the tip end part of the piston rod 5 is projected to the lower side of the piston 1 in Fig. 1. In addition, the outer diameter of the tip end 5a of the piston rod 5 is smaller than the outer diameter of the piston rod 5 positioned at the upper side of the tip end 5a in Fig. 1. Further, a stepped part 5b is formed at the portion where the outer diameters of the upper side and the tip end part are different.

A piston nut 4 is screwed to the tip end 5a of the piston rod 5. The piston nut 4 is provided with a cylinderical part 4a, and a flange 4b extendingly provided from the lower end outer periphery in Fig. 1. A small diameter part 4c having a smaller diameter than the cylinderical part 4a is formed to the upper end outer periphery of the cylinderical part 4a.

The tip end 5a of the piston rod 5 is inserted in, the ring-shaped sealing member 22 to the outer periphery wall of which the restrictor member 17 is installed in a freely slidable manner, the spacer 23, the ring-shaped barrier body 24 arranged to the upper chamber 41 side of the piston 1, for dividing the port 2 and the upper chamber 41, the spacer 101, the compressing side leaf valve 100, and the piston 1 in this order through the hole provided at the central side of the each of the members respectively, at the same time, the piston nut 4 is screwed to the screwed part 5c provided to the tip end of the piston rod 5 from below the piston 1 in Fig. 1, thereby, the respective members are fixed to the piston rod 5 by being sandwiched between the stepped part 5b of the piston rod 5 and the upper end of the piston nut 4.
The diameter of the lower end opening part in the insertion hole 1b provided to the bottom part 1a of the piston 1 is widened to provide a wide diameter part 1e and the stepped part is formed, and the upper end in Fig. 1 of the small diameter part 4c in the cylinderical part 4a can be inserted to this stepped part.

The plurality of ring-shaped spacer 7 having smaller outer diameter than the outer diameter of the leaf valve 10 slidably contacted to the outer periphery of the small diameter part 4c of the piston nut 4 are layered to the bottom part 1a of the piston 1. And, the leaf valve 10 slidably contacted to the outer periphery of the small diameter part 4c is layered to the lower side of the spacer 7. Further, the plurality of ring-shaped spacer 8 having the smaller outer diameter than the outer diameter of the leaf valve 10 and slidably contacted to the outer periphery of the small diameter part 4c are layered to the lower side of the leaf valve 10. In addition, the valve suppressing member 11 slidably contacted to the outer periphery of the small diameter part 4c is layered to the lower side of the spacer 8.

The leaf valve 10 is a layered leaf valve which is constructed by being layered a plurality of leaf formed into a ring-shape, the upper surface in Fig. 1 of the leaf valve 10 is contacted against the valve seat 1c so that the port 2 of the piston 1 can be closed. In addition, in the leaf valve 10, although not illustrated in detail, a notch provided to the outer periphery of the leaf which is seated on the valve seat 1c or the widely known orifice formed by being punched to the valve seat 1c is provided.

Further, in this embodiment, although the leaf valve 10 is constructed as a layered leaf valve, the number of the above described leaf may be in any number according to the damping property (the relation of the damping force against the piston speed) achieved by the present valve structure, it may be in plural or in only one according to the damping property to be generated in the damper. Further, each of the leaf can be set to have different outer diameter in accordance with the damping properly to be generated in the damper.

By providing the wide diameter part 1e, the piston nut 4 can be positioned in the radius direction in relation to the piston 1, it becomes possible to install the leaf valve 10, the spacer 7, 8, the valve suppressing member 11 to the tip end 5a of the piston rod 5 all in once together with the piston 1 after installing these members to the piston nut 4, and it is convenient upon production, however, the wide diameter part 1e may be omitted.

As described above, by forming the piston 1 into cylinderical shape having a bottom, it becomes possible to house the members constructing the valve structure such as the leaf valve and the like in the piston 1.So, the length between the upper end of the piston 1 in Fig. 1 and the lower end of the piston nut 4 in Fig. 1 can be shortened and the piston part can be made smaller.

The valve suppressing member 11 layered at the lowest in Fig. 1 is provided with a ring-shaped main body 11a having the inner periphery slidably contacted to the outer periphery of the small diameter part 4c of the piston nut 4 and the outer diameter set to approximately the same as the outer diameter of the leaf valve 10, and a cylinderical part 11b extended downward from the lower end of the ring-shaped main body 11a in Fig. 1 and also having the inner periphery slidably contacted to the outer periphery of the small diameter part 4c.

The coil spring 15 which is a biasing means is interveningly provided between the ring-shaped main body 11a and the flange 4b of the piston nut 4, and the leaf valve 10 is pressed to the valve seat 1c side through the valve suppressing member 11 by the coil spring 15.

In addition, although it is possible to omit the cylinderical part 11b, the cylinderical part 11b has a function to center the coil spring 15, and the biasing force of the coil spring 15 can be applied to the valve suppressing member 11 evenly by this centering function, and so it is desired to be provided.

According to the above described construction, the biasing force of the coil spring 15 is applied to the inner periphery side of the leaf valve 10 through the valve suppressing member 11, thereby the leaf valve 10 is biased to the direction closing the port 2 by the coil spring 15.

Therefore, the leaf valve 10 and the valve suppressing member 11 are constructed such that when the piston 1 is moved upward in Fig. 1 and the difference between the pressure in the upper chamber 41 and the pressure in the lower chamber 42 becomes large, whole of the leaf valve 10 is moved backward from the piston 1 in the axial direction, in another word, lifted downward in Fig. 1 against the biasing force with compressing the coil spring 15.

The overall thickness of the spacer 7 in the axial direction is set to shorter than the length between the bottom part 1a of the piston 1 and the tip end of the valve seat 1c in the axial direction to provide an initial deflection to the leaf valve 10 to which the biasing force is applied to the inner periphery side.

With the settings of the amount of deflection of this initial deflection, the valve opening pressure at which the leaf valve 10 is separated from the valve seat 1c to open the port 2 can be adjusted. The amount of deflection of this initial deflection can be changed by the overall thickness of the spacer 7, and it is set optimally in the vehicle and the like to which the damper is applied. In addition, it is possible to omit the spacer 7 depending on the distance between the bottom part 1a of the piston 1 and the lower end of the valve seat 1c in the axial direction.

In the above description, although the biasing means is the coil spring 15, it is only necessary to apply the prescribed biasing force to the leaf valve 10, the coil spring may be for example, conical spring or leaf spring, and elastic body such as rubber and the like.

Next, a detailed description is given to each of the members arranged above the piston 1 in Fig. 1. A barrier body 24 opposing to the piston 1 through the spacer 101 and the leaf valve 100 is laminated above the piston 1.

The barrier body 24 is formed into cylinderical shape having a bottom with a bottom part 24a, and the bottom part 24a is provided with the insertion hole 24b into which the tip end 5a of the piston rod 5 is inserted through. The barrier body 24 is contacted against the end part outer periphery of the upper chamber 41 side of the piston 1 at the lower end of the cylinderical part 24c in Fig. 1 to cover the upper surface of the piston 1 in Fig. 1, and the upper chamber 41 and the port 2 are partitioned with the barrier body 24, thereby defining the space between the piston 1 and the barrier body 24.

The bottom part 24a is provided with an inner periphery hole 21a arranged at the inner periphery side of the bottom part 24a and penetrating through the top to the bottom in Fig. 1 to allow the communication between the upper chamber 41 and the port 2, and an outer periphery hole 21b arranged at the outer periphery side of the bottom part 24a and penetrating through the top to the bottom in Fig. 1 to allow the communication between the upper chamber 41 and the port 2. The barrier body 24 is communicating the upper chamber 41 and the port 2 through the inner periphery hole 21a and the outer periphery hole 21b only. Further, the outer periphery hole 21b functions as a fixed restrictor.

Above the barrier body 24 in Fig. 1, a spacer 23 arranged to the outer periphery of the tip end part 5a of the piston rod 5 is layered so as not to close the inner periphery hole 21a of the barrier body 24, at the same time, at the upper side of the spacer 23, a ring-shaped sealing member 22 is layered such that the sealing member 22 is fixed to the piston rod 5 and set to be stational in the axial direction in relation to the barrier body 24 and the piston 1.

Above the sealing member 22, the restrictor member 17 is arranged. The restrictor member 17 is provided with a disc part 17a the outer periphery of which is facing to the cylinder inner periphery, a cylinderical part 17b extending downward from the disc part 17a and having the smaller outer diameter than the disc part 17a, and the insertion hole 17c opened at the central part of the disc part 17a. The piston rod 5 is inserted in the insertion hole 17c.

The restrictor member 17 is arranged to the upper chamber 41 side of the barrier body 24, is movable in relation to the piston rod 5 in the axial direction which is up and downward direction in Fig. 1, and is capable of changing the distance to the barrier body 24. Further, the upward movement of the restrictor member 17 is restricted by the stop ring 18 installed to the outer periphery of the piston rod 5.

When the restrictor member 17 is moved downward in Fig. 1, the cylinderical part 17b comes closer to the upper surface of the barrier body 24 in Fig. 1, and the cylinderical part 17b is capable of at least reducing the clearance gap between the cylinderical part 17b and the separation wall for separating the inner periphery hole 21a and the outer periphery hole 21b of the barrier body 24. In addition, it may be set so that if the restrictor member 17 is moved downward in Fig. 1, the cylinderical part 17b of the restrictor member 17 would be finally contacted against the upper surface of the barrier body 24 in Fig. 1.

The inner diameter of the cylinderical part 17b is larger than the outer diameter of the piston rod 5, and the sealing member 22 is housed in the cylinderical part 17b. Further, a pressure chamber 26 is formed between the cylinderical part 17b and the sealing member 22, and the pressure chamber 26 is communicated to the inner periphery hole 21a which is the downstream side of flow channel 20 from the restrictor 16 by the orifice passage 22a penetrating through the sealing member 22 from the top to the bottom. Since the pressure chamber 26 is connected to the inner periphery hole 21a through the orifice passage 22a, the pressure in the inner periphery hole 21a is applied into the pressure chamber 26.

Since the sealing member 22 is fixed to the piston rod 5 and stationary in relation to the piston 1 in the axial direction, when the restrictor member 17 is moved up and down in the axial direction, the volume in the pressure chamber 26 would be increased and decreased.

The disc part 17a is provided with a hole 17d penetrating through from the top to the bottom in Fig. 1, and the working fluid is allowed to be transferred through the hole 17d to the inner periphery hole 21a and the outer periphery hole 21b without resistance.

The coil spring 25, which is a spring is interveningly provided between the lower end outer periphery side of the disc part 17a of the restrictor member 17 in Fig. 1 and the barrier body 24. The restrictor member 17 is biased by the coil spring 25 to the upper side in Fig. 1 which is the upper chamber 41 side, and is arranged to the position restricted by the stop ring 18 under the situation where any other force is applied.

A part of the upper end of the coil spring 25 is fitted into the stepped part 17e provided to the lower end of the disc part 17a, and further, a part of the lower end is fitted into the stepped part 24d provided to the upper end outer periphery of the barrier body 24 in Fig. 1. By being constructed in this manner, the coil spring 25 is prevented from the axial displacement.

The leaf valve 100 is provided with the hole 100a, and the working fluid can be transferred from the upper chamber 41 to the lower chamber 42 through the hole 100a, the inner periphery hole 21a and the outer periphery hole 21b.

The flow channel 20 is formed with the clearance gap between the outer periphery of the restrictor member 17 and the cylinder 40, and the inner periphery hole 21a and the outer periphery hole 21b of the barrier body 24. That is, the flow channel 20 is branched to, during the flow, the inner periphery hole 21a and the outer periphery hole 21b provided to the barrier body 24. Further, the leaf valve 100 is provided with the hole 100a, and the working fluid can be transferred from the upper chamber 41 to the lower chamber 42 through the flow channel 20 and the hole 100a provided to the leaf valve 100 and the port 2 in this order.

At the time of the extending stroke of the damper during which the piston 1 is moved upward in Fig. 1 in relation to the cylinder 40, the restrictor member 17 is moved downward in Fig. 1 according to the pressure difference between the upper chamber 41 and the pressure chamber 26, and the restrictor member 17 comes closer to the barrier body 24. Thereby, the clearance gap communicated to the inner periphery hole 21a, between the cylinderical part 17b and the barrier body 24 can be reduced, and the reduction in this clearance gap results in the reduction of the flow channel area of the flow channel 20.

The restrictor member 17 is biased upwards in Fig. 1 by the coil spring 25 and by receiving the pressure in the pressure chamber 26, and, biased downward in Fig. 1 by receiving the pressure in the upper chamber 41. The restrictor member 17 functions as the restrictor 16 for providing the resistance to the flow of the working fluid by reducing the flow channel area of the flow channel 20 by reducing the clearance gap communicated to the inner periphery hole 21a, between the cylinderical part 17b of the restrictor member 17 and the bottom part 24a of the barrier body 24.

The restrictor 16 generates the pressure difference between the pressure in the flow channel 20 of the downstream of the restrictor 16 and the pressure in the upper chamber 41. Then, when the pressure in the upper chamber 41 is exceeded the pressure in the flow channel 20 of the downstream side by the prescribed level, the restrictor member 17 is moved to the piston 1 side to get closer to the barrier body 24, and finally, the clearance gap between the cylinderical part 17b of the restrictor member 17 and the bottom part 24a of the barrier pair 24 is reduced until the flow channel area of the flow channel 20 is minimized. That is, the restrictor 16 reduces the flow channel area of the flow channel 20 by the pressure difference applied to the restrictor member 17 between the upper chamber 41 and the flow channel 20 of the downstream side of the restrictor 16.

The pressure difference between the upper chamber 41 and the flow channel 20 of the downstream side of the restrictor 16 is genereated by the pressure loss of the working fluid passing through the restrictor 16, and this pressure difference is determined by the flowing rate of the working fluid passing through the restrictor 16 for moving from the upper chamber 41 to the lower chamber 42.

Since the restrictor member 17 functions as the restrictor by moving closer to the barrier body 24, for reducing the clearance gap between the cylinderical part 17b of the restrictor member 17 and the barrier body 24, the pressure in the flow channel 20 of the downstream side from the restrictor 16 changes according to the size of the clearance gap between the cylinderical part 17b and the barrier body 24. In another word, when the clearance gap between the cylinderical part 17b and the barrier body 24 is reduced, the pressure in the flow channel 20 of the downstream side of the restrictor 16 would be reduced. In addition, since the outer periphery hole 21b functions as a fixed restrictor, the situation that the pressure in the flow channel 20 of the downstream side of the restrictor 16 becomes the equal pressure at before and after the restrictor 16 is avoided.

The pressure chamber 26 is connected to the inner periphery hole 21a which is the flow channel 20 of the downstream side of the restrictor 16 through the orifice passage 22a, and so the movement of the restrictor member 17 becomes slow and the flow channel area of the flow channel 20 is prevented from being rapidly reduced by the restrictor member 17.

Further, at the time of the compressing stroke of the damper during which the piston 1 is moved downward in Fig. 1 in relation to the cylinder 40, although the working fluid is transferred through port 1d from the lower chamber 42 to the upper chamber 41, the leaf valve 100 of the compressing side is limited in the maximum amount of deflection by the bottom part 24a of the barrier body 24. At this time, the outer periphery hole 21b provided to the outer periphery side of the bottom part 24a of the barrier body 24 is not closed by the leaf valve 100.

A description is given as to the operation of the valve structure of the damper in the first embodiment constructed as described above.

At the time of the extending stroke of the damper during which the piston 1 is moved to the upper side in Fig. 1 in relation to the cylinder 40, the pressure in the upper chamber 41 is increased and the working fluid in the upper chamber 41 is moved into the lower chamber 42 by passing through the port 2.

When the piston speed which is the expansion and contraction speed of the damper is in the low-speed range, since the pressure loss in the restrictor 16 is small, the difference between the pressure in the upper chamber 41 and the pressure in the flow channel 20 of the downstream side of the restrictor 16 is small, and the restrictor member 17 is not moved to the barrier body 24 side against the biasing force of the coil spring 25, and so the flow channel area of the flow channel 20 is not reduced by the restrictor 16.

Further, although the working fluid passed through the flow channel 20 is transferred to the lower chamber 42 through the port 2, the leaf valve 10 can not be moved backward and lifted from the piston 1 against the biasing force of the coil spring 15, and the leaf valve 10 is pressed by being biased by the coil spring 15 so as to close the port 2. Thus, the amount of deflection of the leaf valve 10 deflected about the outer periphery edge of the spacer 8 as the supporting point is only little, and the working fluid is mainly passed through the orifice formed by the notch provided on the outer periphery of the leaf which is seated on the valve seat 1c of the leaf valve 10, or by being punched in the valve seat 1c.

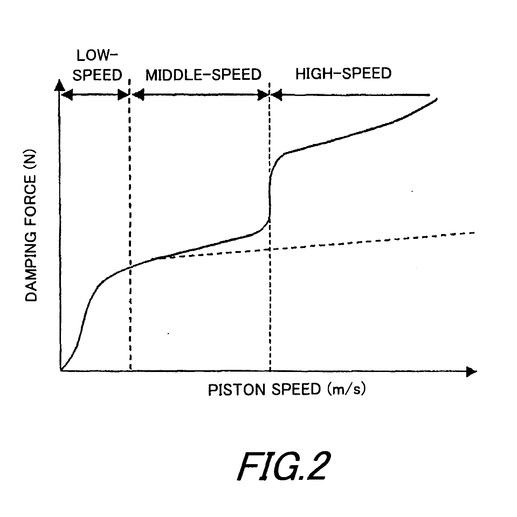

The ring-shaped clearance gap formed between the leaf valve 10 and the valve seat 1c is very small, and the working fluid is passed through the orifice, therefore, the damping property (relationship of the damping force against the piston speed) at this time is such that, as illustrated in Fig. 2 with the solid line, the damping coefficient is relatively large in this low-speed range.

When the speed of the piston 1 is reached to the middle-speed range, the difference between the pressure in the upper chamber 41 and the pressure in the flow channel 20 of the downstream side of the restrictor 16 becomes larger, and so, the thrust moving toward the piston 1 side applied to the restrictor member 17 becomes larger compared to the case where the speed of the piston 1 is in the low-speed range. However, even when the piston speed is in the middle-speed range, the restrictor member 17 is set not to reduce the clearance gap between the cylinderical part 17b and the barrier body 24, and the flow channel area is not reduced.

In the sate where the speed of the piston 1 is reached to the middle-speed range, the difference between the pressure in the upper chamber 41 and the pressure in the lower chamber 42 becomes large, and the force of the working fluid pressing the leaf valve 10 downward in Fig. 1 becomes large, therefore, the force of pressing down overcomes the biasing force of the coil spring 15, and the overall leaf valve 10 is moved backward from the piston 1 in the axial direction. In another word, the leaf valve 10 is moved downward in Fig. 1 and lifted, thus the clearance gap between the valve seat 1c and the leaf valve 10 becomes larger as the piston speed gets faster.

In another word, when the piston speed is in the middle-speed range, the damping properly becomes the damping property that, as illustrated in Fig. 2 with the solid line, the pressure loss due to the restrictor 16 installed in the flow channel 20 and the outer periphery hole 21b as the fixed restrictor arranged at upper side from the piston 1 is added to the damping property illustrated with the broken line in Fig. 2, which is the damping property in the case where the overall leaf valve 10 is separated from the bottom part 1a of the piston 1 in the valve structure only constructed with the members arranged below the piston 1 in Fig. 1.

When the piston speed is reached to the high-speed range, the force of the working fluid pressing the leaf valve 10 downward in Fig. 1 becomes even larger, and the distance that the leaf valve 10 is moved backward from the piston 1 in Fig. 1 becomes larger, and the clearance gap between the leaf valve 10 and the valve seat 1c becomes larger than when the piston speed is in the middle-speed range.

As the difference between the pressure in the upper chamber 41 and the pressure in the flow channel 20 of the downstream side of the restrictor 16 becomes even larger, the restrictor member 17 overcomes the biasing force by the coil spring 25 and the pressure in the flow channel 20 of the downstream side of the restrictor 16. And, the restrictor member 17 is moved to the piston 1 side and comes to the closest to the barrier body 24, and the restrictor 16 minimizes the flow channel area of the flow channel 20. In addition, when the restrictor member 17 in the restrictor 16 comes the closest to the barrier body 24, if the restrictor member 17 is contacted against the barrier body 24, the inner periphery hole 21a would be completely closed.

When the piston speed is in the high-speed range, the restrictor 16 is set such that the pressure in the upper chamber 41 is exceeded the pressure in the flow channel 20 by the prescribed level. The prescribed level is set such that when the piston speed is in the high-speed range, the restrictor 16 minimizes the flow channel area of the flow channel 20.

Therefore, when the speed of the piston 1 is in the high-speed range, the working fluid in the upper chamber 41 is transferred to the lower chamber 42 through only the flow channel 20 the flow channel area of which is minimized and the port 2, and the flow channel area is restricted, and so, the pressure loss would be increased proportionally with the increase of the speed of the piston 1.

That is, in the damping property when the piston speed is in the high-speed range, as illustrated in Fig. 2, the flow channel area is restricted, and so the gradient becomes larger than is in the middle-speed range, and the damping force would be increased with the increase of the speed of the piston 1.

In addition, since the damping property in Fig. 2 shows a steady damping force against the piston speed, it seems that the damping force is increased rapidly when the piston speed becomes the high-speed range. However, it requires certain length of time until the flow channel area of the flow channel 20 is minimized by the restrictor member 17 since the pressure chamber 26 is communicated to the flow channel 20 of the downstream side of the restrictor 16 through the orifice passage 22a.

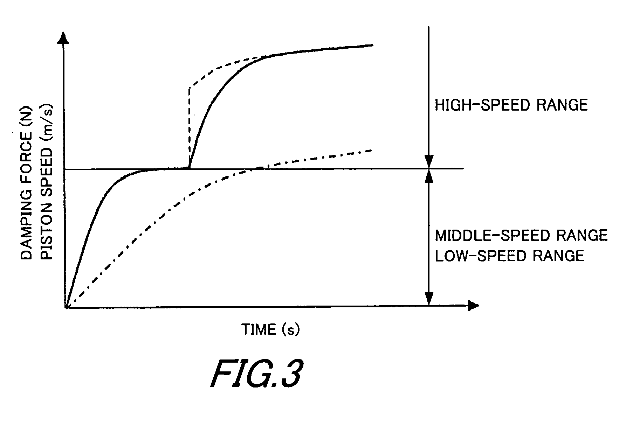

Therefore, when the time is taken in the horizontal axis, and the damping force and piston speed is taken in vertical axis, as illustrated in Fig. 3, as the piston speed shown with the alternating long and short dash line is changed from the middle-speed range to the high-speed range, the damping property shown with the solid line is such that the damping force is increased as the time passes. Thus, in practice, there is no rapid change of the damping force, and the vehicle passenger would not feel uncomfortable feeling with the rapid change of the damping force or shock. In addition, if the pressure chamber 26 is simply communicated with the lower chamber 42 without providing the orifice passage 22a, the damping property thereof would be such that, as shown with the broken line in Fig. 3, the damping force would rapidly change if the piston speed is changed from the middle-speed range to the high-speed range.

As above, in the valve structure of the damper of this embodiment, when the piston speed is in the middle-speed range, the damping force is controlled to low, and once the piston speed is reached to the high-speed range, the damping force can be increased more than when the piston speed is in the middle-speed range. Therefore, even when the piston speed is reached to the high-speed range, the sufficient damping force is provided, the vibration control is sufficiently performed, and the riding quality in the vehicle can be improved.

Further, under the situation in which the vibration amplitude is large such that the damper is extended the most, and, the piston speed is reached to the high-speed range, the generated damping force of the damper can be increased by increasing the damping coefficient, thereby, the piston speed can be smoothly decreased, and the shock at the time of the most extension can be softened.

In addition, although the barrier body 24 is formed into cap-shape, and the port 2 and the upper chamber 41 which is the first chamber are divided so as to cover the upper surface of the piston 1 in Fig. 1, the barrier body 24 may be formed into the disc-shape, and the port 2 and the upper chamber 41 which is the first chamber may be divided by slidably contacting the outer periphery of the barrier body 24 to the inner periphery of the cylinder 40.

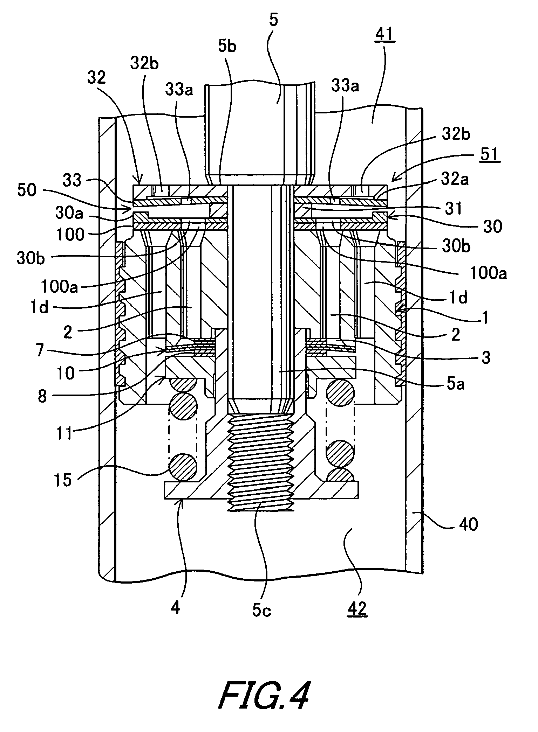

Next, a description is given to the valve structure of the damper in the second embodiment. The valve structure of the damper in this embodiment differs, as illustrated in Fig. 4, to the valve structure in the first embodiment in the construction above the piston 1 in Fig. 4.

In addition, since the description would be repeated, as to the same members with those of the valve structure of the damper in the first embodiment, only the same numerical figures are designated, and the detailed descriptions thereof are omitted.

The valve structure of the damper in this embodiment is provided with, as illustrated in Fig. 4, at above the piston 1 in Fig. 4 , the leaf valve 100 of the compressing side, a first disc member 30 layered to the upper chamber 41 side which is the first chamber of the piston 1 which is the valve disc and having the cylinderical part 30a at the end part outer periphery side of the upper chamber 41 side, a second disc member 32 layered to the first disc member 30 through the spacer 31 and having the cylinderical part 32a facing to the cylinderical part 30a of the first disc member 30 at the end part outer periphery side of the piston 1 side, a through hole 30b provided to the first disc member 30 so as to face to the port 2, the opening 32b for communicating the upper chamber 41 side and the piston 1 side of the second disc member 32, and a leaf valve 33 contacted against the end part of the cylinderical part 32a of the second disc member 32 by being interveningly provided between the second disc member 32 and the spacer 31.

Further, in this embodiment, the flow channel 50 is formed with the clearance gap between the first disc member 30 and the leaf valve 33, and the penetrating hole 33a penetrating through the leaf valve 33.

The restrictor 51 is constructed with the leaf valve 33 and the cylinderical part 30a of the first disc member 30. The restrictor 51 reduces the flow channel area in the flow channel by contracting the leaf valve 33 against the cylinderical part 30a of the first disc member 30.

The flow channel 50 is communicated to the port 2 through the through hole 30b of the first disc member 30 and the hole 100a of the leaf valve 100, and the penetrating hole 33a which is the flow channel 50 is also communicated to the port 2 through the through hole 30b of the first disc member 30 and the hole 100a of the leaf valve 100.

In the following, the detailed description is given as to the each of the parts.

All of the first disc member 30, the spacer 31, the second disc member 32 and the leaf valve 33 are ring-shaped, and the tip end 5a of the piston rod 5 is inserted into the inner periphery, and as in the first embodiment, they are fixed to the tip end 5a of the piston rod 5 by the piston nut 4 together with the piston 1.

The cylinderical part 30a of the first disc member 30 and the cylinderical part 32a of the second disc member 32 are opposed through the prescribed clearance gap. Further, the leaf valve 33 is fixed at the inner periphery side by being sandwiched with the spacer 31 and the second disc member 32. And the outer periphery of the leaf valve 33 is projected into the clearance gap formed by the cylinderical part 30a and the cylinderical part 32a, and contacts against the inner periphery edge of the cylinderical part 32a of the second disc member 32 in a deflected state.

Therefore, the outer periphery side of the leaf valve 33 is contacted against the cylinderical part 32a of the second disc member 32, and the clearance gap is formed between the leaf valve 33 and the cylinderical part 30a of the first disc member 30, under the situation where no force is applied to the leaf valve 33. In this state, the flow channel area is maximized, and the upper chamber 41 and the port 2 are in the communicating state through the flow channel 50. Further, in this state, the upper chamber 41 is communicated with the port 2 through the penetrating hole 33a provided to the leaf valve 33 and the opening 32b of the second disc member 32.

When the leaf valve 33 receives the pressure of the working fluid flowing from the upper chamber 41 through the opening 32b of the second disc member 32, the outer periphery side of the leaf valve 33 is deflected downward in Fig. 4, and the outer periphery side of the leaf valve 33 is contacted to the upper end of the cylinderical part 30a of the first disc member 30 in Fig. 4, then, the flow channel area is reduced to be minimized, and in the case of this embodiment, the upper chamber 41 is communicated to the port 2 through the only penetrating hole 33a.

The pressure in the upper chamber 41 is applied to the upper surface of the leaf valve 33 in Fig. 4 which is the valve body of the restrictor 51, and the pressure in the flow channel of the downstream side of the restrictor 51 is applied to the lower surface of the leaf valve 33 in Fig. 4. Therefore, the restrictor 51 in this embodiment also reduces, as the restrictor 16 in the first embodiment, the flow channel area in the flow channel 50 when the pressure in the upper chamber 41 is exceeded the pressure in the flow channel 50 of downstream side of the restrictor 51 by the prescribed level.

In the valve structure of the damper constructed as above, when the piston speed during the piston 1 is moving upward in Fig. 4 in relative to the cylinder 40 is in the low-middle-speed range, the difference between the pressure of the upper chamber 41 and the pressure in the flow channel 50 of the downstream side of the restrictor 51 is not large, and so the flow channel area is not reduced by the leaf valve 33. On the other hand, when the piston speed is reached to the high-speed range, the leaf valve 33 is largely deflected to minimize the flow channel area. On the other hand, the action of the leaf valve 10 is the same as in the first embodiment.

Therefore, in the valve structure of the damper in this embodiment, as in the valve structure of the damper in the first embodiment, when the piston speed is in the middle-speed range, the damping force is controlled to low and at the same time, when the piston speed is reached to the high-speed range, the damping force can be increased more than when the piston speed is in the middle-speed range. Thus, even when the piston speed is reached to the high-speed range, the sufficient damping force is provided, the vibration control is sufficiently performed, and the riding quality in the vehicle can be improved.

Further, under the situation in which the vibration amplitude is large such that the damper is extended the most, and, the piston speed is reached to the high-speed range, the generated damping force of the damper can be increased by increasing the damping coefficient, thereby, the piston speed can be smoothly decreased, and the shock at the time of the most extension can be softened.

In addition, in the case of this embodiment, the first disc member 30 has a certain level of elasticity, and at the time of compression of the damper, the outer periphery side of the first disc member 30 can deflect upward in Fig. 4 with the leaf valve 100 by the pressure of the working fluid transferring from the lower chamber 42 to the upper chamber 41 through the port 1d, thereby the port 1d is prevented from being closed when the damper is being compressed.

Further, in the valve structure of the present invention, the leaf valve 10 is biased by the coil spring 15 which is the biasing means and at the same time, is layered such that the distance from the piston 1 which is the valve disc can be varied. When the piston speed is in the middle-speed range, although the valve capable of lifting the leaf valve 10 from the piston 1 to control the damping force low to improve the riding quality in the vehicle is applied, it is not limited thereto, and the valve in which the inner periphery of the leaf valve 10 is fixed to the tip end 5a of the piston rod 5 regardless of being biased by the biasing means, and the outer periphery side is deflected to be separated from the valve seat 1c to open the port 2 may be applied. Even in the such case, when the piston speed is reached to the high-speed range, the damping force can be made to larger than when the piston speed is in the middle-speed range, and the effect of the present invention is not lost.

Although the descriptions as to each of the embodiments of the valve structure are concluded with the above, it is possible to realize the valve structure of the present invention to the compressing side damping valve of the piston part of the damper or to the base valve part, and, of course, generally it is possible to apply to the valve of the damper functioning as the damping force generating component for generating the damping force.

## Claims

1. A valve structure of a damper comprising a piston (1) defining a first chamber (41) and a second chamber (42) within the damper and having a port (2) for communicating the first chamber (41) and the second chamber (42), and
a first leaf valve (10) layered to the end surface of the second chamber (42) side of the piston (1) and for closing the downstream of the port (2) against the flowing direction of the working fluid when the working fluid is flowing from the first chamber (41) to the second chamber (42), wherein the valve structure further comprising
a flow channel (20) for communicating the first chamber (41) and the upstream of the port (2) in the flowing direction, and
a restrictor (16, 51) provided in the flow channel (20), wherein
the restrictor (16, 51) reduces the flow channel area in the flow channel (20) when the pressure of the first chamber (41) exceeds the pressure in the flow channel (20) of the downstream of the restrictor (16, 51) by the prescribed level.

2. The valve structure of the damper according to claim 1 further comprising,
a barrier body (24) arranged at the first chamber (41) side of the piston (1), for blocking the port (2) and the first chamber (41), wherein
the flow channel (20) is branched into an inner periphery hole (21a) provided to the inner periphery side of the barrier body (24) and communicating the first chamber (41) and the port (2), and a outer periphery hole (21b) provided to the outer periphery side of the barrier body (24) and communicating the first chamber (41) and the port (2),
the restrictor (16) is provided with;
a restrictor member (17) arranged to the first chamber (41) side of the barrier body (24), and provided so as to be able to change the distance in the axial direction to the barrier body (24); and
a spring (25) interveningly provided between the barrier body (24) and the restrictor member (17), and
the flow channel area of the flow channel communicated to the inner periphery hole (21a) is reduced by bringing the restrictor member (17) closer to the barrier body (24).

3. The valve structure of the damper according to claim 2, wherein
the restrictor member (17) is provided with;
a disc part (17a), the outer periphery of which is faced to the cylinder inner periphery; and
a first cylinderical part (17b) extended downward from the disc part (17a),
the restrictor member (17) houses a sealing member (22) fixed in the axial direction to the barrier body (24) in the first cylinderical part (17b) in a freely slidable manner,
the pressure chamber (26) is defined by the first cylinderical part (17b) and the sealing member (22), and
the pressure chamber (26) is communicated to the downstream side of the restrictor (16) in the flow channel (20) through an orifice passage (22a) provided to the sealing member (22).

4. The valve structure of the damper according to claim 1 further comprising
a first disc member (30) layered to the first chamber (41) side of the piston (1), and having a second cylinderical part (30a) at the outer periphery side of the first chamber (41) side,
a second disc member (32) layered to the first disc member (30) through a spacer (31), and having a third cylinderical part (32a), at the outer periphery side of the piston (1) side, facing to the second cylinderical part (30a) of the first disc member (30),
a through hole (30b) provided to the first disc member (30) so as to face to the port (2),
a hole (32b) provided to the second disc member (32), and communicating the first chamber (41) side and the piston (1) side,
a second leaf valve (33) contacted against the end part of the third cylinderical part (32a) of the second disc member (32) by being interveningly provided between the second disc member (32) and the spacer (31), wherein
the flow channel (20) is formed with the clearance gap formed between the second cylinderical part (30a) of the first disc member (30) and the second leaf valve (33), and the penetrating hole (33a) penetrating the second leaf valve (33),
the restrictor (51) is constructed with the second leaf valve (33), and the second cylinderical part (30a) of the first disc member (30), and
the flow channel area is reduced by bringing the second leaf valve (33) closer to the second cylinderical part (30a) of the first disc member (30).

5. The valve structure of the damper according to any one of claims 1 to 4 wherein,
the first leaf valve (10) is layered so as to be able to change the distance to the piston (1), and
further comprising a biasing means (15) for biasing the first leaf valve (10) in the closing direction of the port (2).
